# EUROPEAN PATENT APPLICATION

(11) **EP 0 944 232 A2**
(43) Date of publication of application: **22.09.1999**
(21) Application number: 99302037.9
(22) Date of filing: 16.03.1999
(51) Int. Cl.: H04M 19/08

(54) **Customer premises equipment with reduced power consumption**

(30) Priority: 20.03.1998 US 45267; 23.06.1998 US 103020
(71) Applicant: LUCENT TECHNOLOGIES INC., Murray Hill, New Jersey 07974-0636 (US)
(72) Inventor: Byers, Charles Calvin, Aurora, Illinois 60504 (US)
(74) Representative: Watts, Christopher Malcolm Kelway, Dr.

(57) **Abstract**

Around-the-clock accessibility of customer premises equipment interconnected to a broadband network is enhanced by perpetual mode operation of a broadband network interface. When the customer premises equipment is in a "powered-down" or "OFF" state, the perpetual mode portion of the broadband network interface is capable of receiving incoming data from the broadband network. Further, the perpetual mode portion of the broadband network interface may extend predetermined outgoing data to the broadband network. The exchange of data between the perpetual mode portion of the broadband network interface and the broadband network is accomplished using minimal power supplied by a wall transformer or battery pack interconnected to the broadband network interface and used specifically when the customer premises equipment is in an "OFF" state. Advantageously, the customer premises equipment is able to exchange data with the broadband network in substantially real time while operating in an energy efficient manner. Also, perpetual mode operation permits connection of a telephone line that is available even when the customer premises equipment is powered-down. In accordance with one feature, the interfact can recognize when it is unable to respond to incoming data and can control the "powering up" of the customer premises equipment. Advantageously, this arrangement allows the customer premises equipment to respond to complex requests by powering-up the customer premises equipment while allowing the customer premise equipment to be normally powered-down, or to be powered down during off-peak periods.

## Description

### Technical Field:

This invention relates to customer premises equipment and, more particularly, to improving the ability of customer premises equipment to access broadband networks.

### Background of the Invention:

The worldwide proliferation of computer technology and the expansive reach of broadband networks has spawned higher expectations about the accessibility of communication systems. Indeed, electronic mail, voice messaging, information from the worldwide web and online databases provide substantially real time data to those with customer premises equipment interconnected to a broadband network, such as the public switched telecommunications network (PSTN).

Current implementations of customer premises equipment require that the equipment remain in an "ON" (or powered-up state) for receiving or sending information via the broadband network. Unfortunately, leaving customer premises equipment, such as a personal computer, in a continual "ON" state accelerates equipment failure. More particularly, constant spinning of computer hard disks causes the spindle bearings supporting these dish to deteriorate sooner than expected. Further, constantly supplying power to enable the continual operation of a personal computer is an expensive endeavor. For these reasons, most personal computer users subscribe to a twenty-four (24) hour online service which maintains a central host to enable around-the-clock exchange of information. Some subscribers find, however, that these on-line services are costly, occasionally unreliable and provide little value other than acting as a temporary holding box while the subscriber's personal computer is in an "OFF" (or powered-down) state.

### Summary of the Invention:

Applicant has recognized that there is a need in the art for reliable, efficient and inexpensive around-the-clock operation of customer premises equipment interconnected to a broadband network. More generally, there is a need to save power and to spare the spindle bearing of the computer hard disks.

This need is addressed and a technological advance is achieved by disposing a perpetual operation portion in a broadband network interface of all customer premises equipment interconnected to a broadband network. The broadband network interface includes a non-volatile memory designated for receiving and sending data when the customer premises equipment is in an "OFF" state. After a user shuts off the equipment, the broadband network interface continues to operate at a greatly decreased power level while emulating a system capable of receiving electronic mail or servicing requests such as web page retrieval for data from the broadband network.

In the preferred embodiment, the broadband network interface is an intelligent modem interconnected to a personal computer. The modem operates in two distinct modes. A first "normal" mode of operation occurs only when the personal computer is in an "ON" or powered-up state. A second operating mode of the modem is defined as the "perpetual" or "always ON' state. The perpetual mode has its own power source and includes storage for receiving incoming data and handling outgoing data requests from the broadband network to which it is interconnected. The storage area is initialized to accept all (or some subset) of incoming data. To ensure data integrity and security, all outgoing data updates are received from a designated personal computer port. Advantageously, operating the modem in perpetual portion enables an around-the-clock presence of the personal computer to the broadband network while using a minimal amount of power and also provides 24 hour access to the telephone line.

### Brief Description of the Drawings:

FIG. 1 is a simplified block diagram *of* customer premises equipment and a broadband network interface in which the present invention may be practiced;
FIG. 2 is a more detailed diagram of the broadband network interface shown in FIG. 1; and
FIGs. 3 and 4 are a flow diagram of a method of permitting the computer to be shut down except when needed.

### Detailed Description:

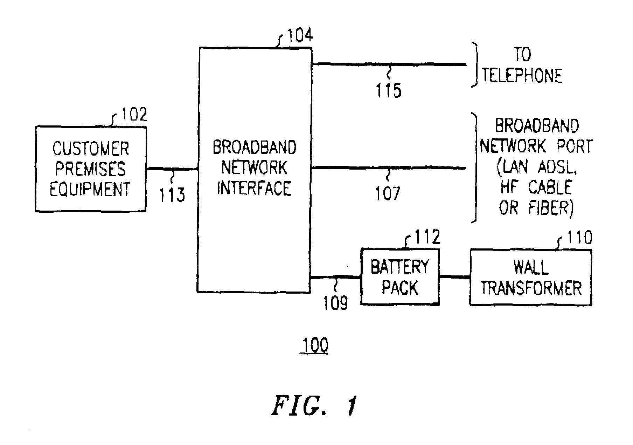

FIG. 1 is a simplified block diagram of a system (logical endpoint) 100 in which the preferred embodiment of the present invention may be practiced. System 100 comprises customer premises equipment 102, such as a personal computer (PC), interconnected via data link 113 to broadband line network interface 104. In the preferred embodiment, broadband network interface 104 is a modem interconnected to a broadband network via data link 107, and to a power source (not shown) via link 109. In the preferred embodiment, broadband network interconnection link 107 is a high speed link such as a local access network (LAN) connection, high frequency cable, Asymmetric Digital Subscriber line (ADSL) or fiber. Telephone link 115 is maintained to interconnect broadband network interface 104 to a telephone on the customer premises.

In the preferred embodiment, at least a portion of broadband network interface 104 is powered by wall transformer 110 which includes a regulator and a battery charger circuit for charging optional back-up battery pack 112. Alternatively, the battery charger circuit may be disposed within the broadband network interface. Transformer 110 or back-up battery pack 112 supply power to at least a portion of broadband network interface 104 when customer premises equipment 102 is in a powered-down state (that is, when broadband network interface 104 is operating in perpetual mode).

Data arriving in broadband network interface 104 from the broadband network during perpetual mode operation is written in a non-volatile memory contained within broadband network interface 104. Non-volatile memory 152 (described in detail below) is accessed by a user of customer premises equipment 102 in normal operating mode. Non-volatile memory 152 also stores predetermined outgoing data (e.g., worldwide web pages) which may be accessed by the broadband network while the customer premises equipment is powered down (or while broadband network interface 104 is operating in perpetual mode). To preserve outgoing data integrity, broadband network interface 104 overwrites its non-volatile memory only when a request is received from the customer premises equipment over data link 113. In other words, there are protected portions of the non-volatile memory contained within the broadband network interface. In this manner, only users of customer premiscs equipment 102 can change outgoing data stored in the broadband network interface and thereby, ensure the integrity of the outgoing data by eliminating the threat of intrusion by the broadband network.

When a user powers up customer premises equipment 102 (that is, when the customer premises equipment is operating in nonnal mode), a program stored within the customer premises equipment rapidly downloads any accumulated incoming data from non-volatile memory 152. The incoming data is then extended to a mail application within customer premises equipment 102 so that the user may read the data. Similarly, when the user makes updates to outgoing data for storage in non-volatile memory 152 of broadband network interface 104, authorizing software stored within the customer premises equipment invokes a routine which writes the updated outgoing data into non-volatile memory 152 as part of the "powering down" process.

In the embodiment shown, broadband network interface 104 includes link 115 to a telephone interface. Broadband network interface 104 is equipped with digital signal processor 154 (described below) for receiving data from the broadband network via link 107 and substantially instantaneously accessing a telephone via link 115 so that a voice call can be received or originated by the user associated with the customer premises equipment 102 while broadband network interface 104 is operating in perpetual mode.

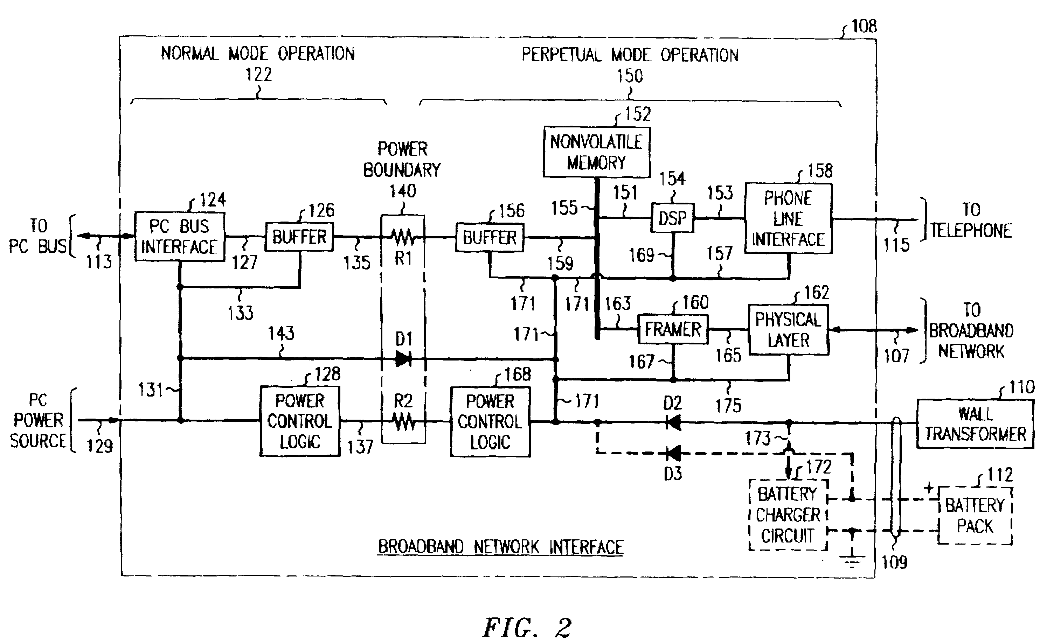

FIG. 2 is a more detailed block diagram of broadband network interface 104 shown in FIG. 1. For illustrative purposes, assume that customer premises equipment 102 is a personal computer (PC) and is interconnected to broadband network via broadband network interface 104. In the preferred embodiment, broadband network interface 104 is divided into "normal" and "perpetual" portions which operate in corresponding "normal" or "perpetual" modes.

More particularly, broadband network interface 104 is divided into two logical portions by power boundary 140. First logical portion (hereinafter, normal mode portion) 122 comprises PC bus interface 124 interconnected to buffer 126 via link 127. Power control logic 128 is interconnected to a PC power source, PC bus 124 and buffer 126 via links 129, 131 and 133, respectively.

Power boundary 140 comprises parallel resistors R1 and R2 and diode D1 and is interconnected to buffer 126 and power control logic 128 via links 135 and 137, respectively. Power boundary 140 is also interconnected to link 131 via link 143. In the preferred embodiment, the value of each resistor is approximately 100 ohms. Resistor R1, R2 and diode D1 serve as the logical boundary dividing the "normal" and "perpetual" portions of modem 108. Nonnal mode portion 122 is powered by the PC power source only when the personal computer associated with broadband network interface 104 is in an "ON" or normal operating state.

Second logical portion (hereinafter, perpetual mode portion) 150 of broadband network interface 104 is continuously powered by wall transformer 110 and/or back-up battery pack 112. Wall transformer 110 includes a power regulator (not shown) and, along with battery pack 112, is interconnected to perpetual mode portion 150 of broadband network interface 104 via link 109 as shown in FIG. 1. Perpetual mode portion 150 also includes non-volatile memory 152 interconnected to digital signal processor 154, buffer 156 and framer 160 via internal bus 155. More particularly, digital signal processor 154, buffer 156 and framer 160 are interconnected to internal bus 155 via links 151, 159 and 163, respectively. Also sbown are telephone interface 158 and physical layer 162. In this embodiment, phone interface 158 is interconnected via link 115 to a standard telephone maintained on the premises. Telephone line interface 158 is also interconnected to digital signal processor 154 via link 153 and to interval bus 155 via link 157. Digital signal processor 154 interconnects the local bus 155 with the phone line interface 158. Physical layer 162 is interconnected to framer 160 via link 165 and maintains link 175 to power bus 171. Framer 160 also maintains link 167 to power bus 171.

Power bus 171 interconnects power control logic 168 to buffer 156 and internal bus 155. In this embodiment, battery charger circuit 174 is shown interconnected to power bus 171 via link 173 and diodes D2, D3. Diodes D2 and D3 serve to isolate the battery pack power source from the PC power source. Isolation of battery pack 112 from the PC power source is required to keep the relatively low capacity battery from attempting to power the entire PC.

Whenever a user of the PC "powers down" broadband network interface 104 operates in perpetual mode. More particularly, perpetual mode portion 150 continues to receive power from wall transformer 110 or battery pack 112 to maintain a PC presence on the broadband network. In perpetual mode, incoming data from the broadband network is received via link 107 in physical layer 162 which extends the data to framer 160 for processing before delivery to non-volatile memory 152 via internal bus 155. The incoming data is stored in non-volatile memory 152 until the personal computer returns to normal mode operation. The non-volatile memory may be initialized to accept all incoming data or some subset thereof if memory space is an issue.

Non-volatile memory 152 also stores predetermined outgoing data which is available to all who request the data via the broadband network. More particularly, requests for outgoing data are received in pbysical layer 162 from the broadband network. The data is extended by physical layer 162 to framer 160 wbere it is processed before forwarding to digital signal processor 154. Digital signal processor 154 processes the request and retrieves appropriate information from non-volatile memory 152. This information is then extended back to the broadband network via link 107. In this manner, predefined outgoing data and incoming data may be processed by customer premises equipment 102 even when it is not operating in a "powered-up" state. When the PC operates in a normal mode, all incoming data stored in non-volatile memory 152 is rapidly downloaded and extended to PC bus interface 124 for delivery to the PC via link 113. Also, updates to outgoing data are automatically written to non-volatile memory 152.

Advantageously, power is conserved by operating the customer premises equipment in perpetual mode while twenty-four (24) hour access to the customer premises equipment by the broadband network is guaranteed.

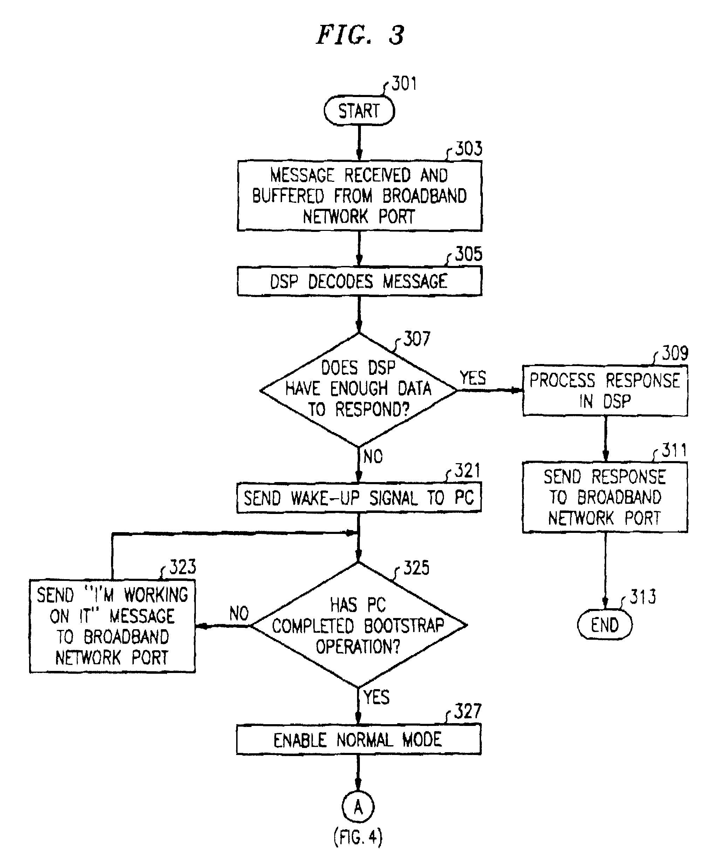

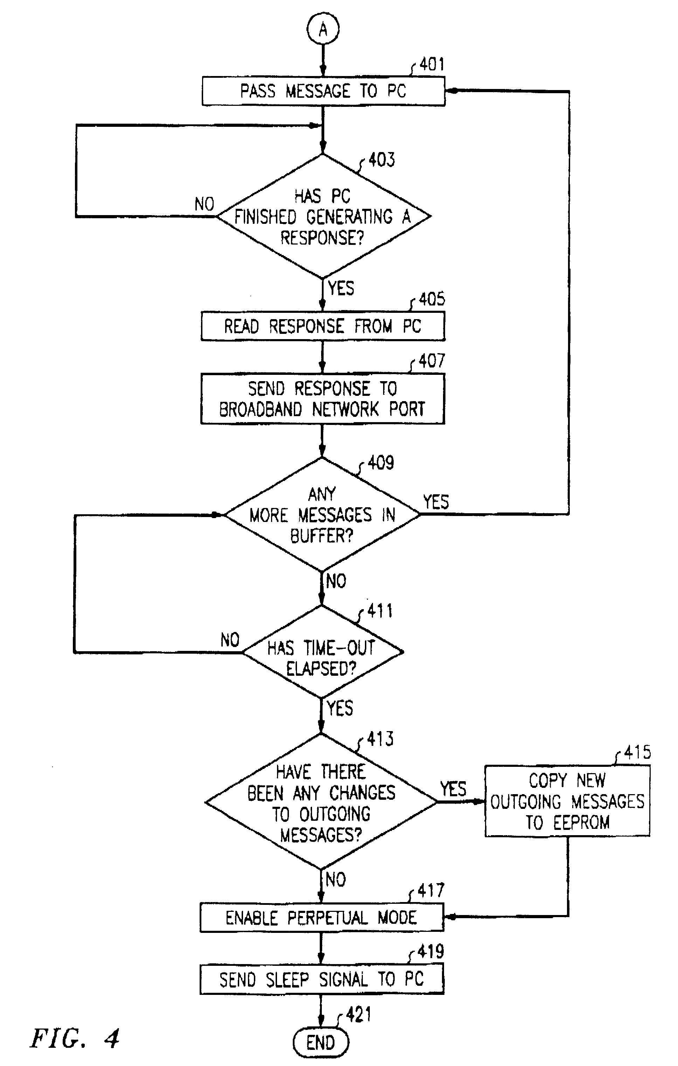

Figures 3 and 4 are flow chart of an arrangement for allowing the interface board to control powering up of the PC, thus allowing the PC to respond automatically when incoming requests demand the services of the PC. In the previous discussion, it has been assumed that only the users of the PC can physically turn the PC on. Such an arrangement has the disadvantage that if the PC is not on and the incoming request cannot be properly responded to by the interface unit with its DSP, then the incoming request cannot be responded to at that time. This would be a significant disadvantage for example, a relatively infrequently used website. In the current state of the art, such a website would have to be serviced either by a PC that is on all the time or by a PC that is only for appropriate times (for example, 9 a.m. to 5 p.m.), and is usually off at other times, thus disappointing potential surfers who would like to access that website.

The object of the arrangement described in Figures 3 and 4 is to permit the PC to be turned off unless a user turns the PC on or unless an incoming request which can only be processed by the PC, is recognized by the DSP.

The process starts at initialization time (Action Block 301). At any time thereafter, a message is received from the broadband network port of the system and buffered (Action Block 303). The DSP decodes this message (Action Block 305). The TDSP then tests whether it has enough data to respond to the input message. If so, it processes the response (Action Block 309), sends the response to the broadband network port (Action Block 311), and terminates its functions (End Block 313). If the DSP does not have enough data to respond (negative results of Test 307), then the DSP sends a wake-up signal to the PC (Action Block 321). This wake-up signal turns on power, causes the PC to boot, and turns on the bard disk in the P. Test 325 is then used to determine whether the PC has completed it boot operation; if not, the DSP sends a message to the broadband network port indicating that the request is being worked on (Action Block 323). When the PC has completed its bootstrap operation, (positive results of Test 325), the normal mode of the PC is enabled (Action Block 327). In this normal mode, messages are passed from the network port to the PC (Action Block 401), and the PC responds. Test 403 is used to determine whether the PC has completed generating its response; when it has, then a response is read from the PC (Action Block 405), and sent to the broadband network port by the DSP (Action Block 407). Test 409 is then used to determined if there are more messages of the buffer of the DSP. If so, Action Block 401 is re-entered and the loop is re-traversed. If no more messages are in the receive buffer of the line card, then the DSP times for a reasonable interval (perhaps one minute), in order to avoid excessive turn-off and shut-down of the PC. Effective during this timing interval, the buffer is checked to see if there are any more messages (Test 409). Test 411 indicates that the time-out has elapsed, then 413 is used to determine whether any changes have been made by users to the outgoing messages. If so, then new outgoing messages are sent the DSP and stored in the electrically erasable programmable read only memory (EEPROM of the DSP (Action Block 415). If there have been no changes, then Action Block 415 is by-passed. Thereafter, the perpetual mode previously described of the DSP is entered, (Action Block 417), and a sleep signal is sent to the PC (Action Block 419). This terminates the actions of the PC until it is re-awakened (End Block 421).

Although this invention has been described with respect to a preferred embodiment, those skilled in the art may devise numerous other arrangements without departing from the scope of the invention as defined in the following Claims.

## Claims

1. Customer premises equipment interconnected to a broadband network comprises:
a broadband network interface for receiving data from the broadband network; and
means for powering at least a portion of the broadband network interface so that data may be received from the broadband network when the customer premises equipment is powered down.

2. The customer premises equipment of claim 1 wherein the broadband network interface includes a normal mode portion and a perpetual mode portion.

3. The customer premises equipment of claim wherein the means for powering at least a portion of the broadband network interface comprises a battery pack interconnected to a battery charger circuit.

4. The customer premises equipment of claim 1 further comprising means for storing data received in the broadband network interface while the customer premises equipment is in a powered-down state.

5. A broadband network interface comprises:
a first portion operating in a first mode;
a second portion interconnected the first portion, the second portion operating in a second mode;
means for temporarily storing information in the second portion, the means for temporarily storing information interconnected to a broadband network;
means for rapidly retrieving information stored in the second portion, the means for rapidly retrieving information being interconnected to the first portion; and
means for powering the second portion, wherein the powering means is independent of means for powering the first portion.

6. The broadband network interface of claim 5 wherein the first portion operates in a first mode when customer premises equipment associated with the broadband network interface is powered up,

7. The broadband network interface of claim 5 wherein the second portion operates in a second mode.

8. The broadband network interface of claim 5 wherein the means for powering the second portion comprises a battery pack.

9. In a telecommunications system comprising a broadband network interconnected to a plurality of logical endpoints, a method of exchanging data between the broadband network and at least one of the logical endpoints comprises:
receiving in the broadband network a request for data from the logical endpoint;
the broadband network accessing a perpetual mode portion of the logical endpoint to retrieve the requested data; and the perpetual mode portion of the logical endpoint extending predetermined outgoing data to the broadband network.

10. The method of claim 9 further comprising;
the broadband network extending data to the logical endpoint; and
the logical endpoint temporarily storing the received data in a local flash memory.

11. The method of claim 10 further comprising:
storing a subset of received data from the broadband network in the local non-volatile memory.

12. The method of claim 9 further comprising:
the perpetual mode portion of the broadband network interface operating while the rest of the logical endpoint is in a powered-down state.

13. The method of claim 9 further comprising:
automatically updating the local flash memory with predetermined outgoing information when the logical endpoint is in a powered-up state.

14. The method of claim 9 further comprising:
operating a telephone interface in perpetual mode.

15. The method of Claim 9 further comprising the steps of:
tbe perpetual mode portion of the logical end point furtber recognizing that it has insufficient data to respond to the request;
the logical end point awakening a connected personal computer (PC);
the logical end point passing the request to the PC;
the PC responding to the request, and returning a response via the logical end point to the broadband network.

16. The customer premises equipment of Claim 1 further comprising:
means in said at least a portion of the broadband network interface for controlling the powering-up of the customer premiscs equipment; and
for recognizing that a request received from said broadband network requires that the customer premises equipment be powered-up in order to be able to respond to a request received from the broadband network.
